# EUROPÄISCHE PATENTSCHRIFT

(11) **EP 2 709 051 B1**
(45) Veröffentlichungstag und Bekanntmachung des Hinweises auf die Patenterteilung: **22.03.2017**
(21) Anmeldenummer: 12184677.8
(22) Anmeldetag: 17.09.2012
(51) Int. Cl.: G06Q 20/32, G06Q 20/08, G08G 1/0962, G08G 1/052, G07B 15/02, G06Q 10/10, G06Q 20/14, G06Q 20/40, G06Q 50/26, G06Q 50/30, G06Q 20/38

(54) **Verfahren zum elektronischen Verarbeiten eines Verkehrsdelikts und Onboard-Unit hierfür**
Method for electronic processing of a traffic offence and onboard unit for the same
Procédé de traitement électronique d'une infraction routière et unité embarquée à cet effet

(43) Veröffentlichungstag der Anmeldung: 19.03.2014
(73) Patentinhaber: Kapsch TrafficCom AG, 1120 Wien (AT)
(72) Erfinder: Leopold, Alexander, 1100 Wien (AT); Povolny, Robert, 1190 Wien (AT); Nagy, Oliver, 1190 Wien (AT)
(74) Vertreter: Weiser, Andreas

(56) Entgegenhaltungen:
- EP-A1- 2 228 270
- EP-A2- 1 708 143
- WO-A1-94/27256
- DE-A1- 19 711 521
- DE-T2- 69 017 905
- KR-A- 20080 016 703
- US-A- 6 163 277
- US-A1- 2004 257 245
- US-A1- 2007 250 334
- ISAAC J T ET AL: "A secure vehicle-to-roadside communication payment protocol in vehicular ad hoc networks", COMPUTER COMMUNICATIONS, ELSEVIER SCIENCE PUBLISHERS BV, AMSTERDAM, NL, vol. 31, no. 10, 25 June 2008 (2008-06-25) , pages 2478-2484, XP022700500, ISSN: 0140-3664, DOI: 10.1016/J.COMCOM.2008.03.012 [retrieved on 2008-03-22]

## Beschreibung

Die vorliegende Erfindung betrifft ein Verfahren zum elektronischen Verarbeiten eines Verkehrsdelikts eines Fahrzeugs, das eine Onboard-Unit mit einem Sendeempfänger, einer Eingabeeinrichtung und einer Ausgabeeinrichtung hat. Die Erfindung betrifft ferner eine Onboard-Unit zur Durchführung dieses Verfahrens.

Aus der US 2007/0250334 A1 ist es bekannt, dass eine zentrale Inkassostelle im Deliktfall dem Benutzer eines fahrzeugfesten Kommunikationsgeräts nach Zusendung einer Deliktinformation die Auswahl zwischen sofortiger Bezahlung oder Berufung einräumt und - in Abhängigkeit von der Benutzerauswahl - zentral die Bezahlung bzw. die Berufung einleitet.

Onboard-Units (OBUs) sind elektronische Geräte, die von Fahrzeugen mitgeführt werden, um die Fahrzeuge drahtlos identifizieren zu können, beispielsweise zur Abrechnung von Mautgebühren in elektronischen Straßenmautsystemen. OBUs können in der Form von aktiven oder passiven Funktranspondern, RFID-Chips (radio frequency identification), NFC-Chips (near field communication), DSRC-Sendeempfängern (dedicated short range communication) für Funk- oder Infrarotdatenübertragung, WAVE- (wireless access in vehicular environments) und WLAN-Nodes (wireless local area networks) usw. ausgeführt sein. Die Erfindung setzt sich zum Ziel, derartige OBUs für die Verarbeitung von Verkehrsdelikten wie Geschwindigkeitsübertretungen, Parkzeitüberschreitungen od.dgl. nutzbar zu machen.

Dieses Ziel wird in einem ersten Aspekt der Erfindung mit einem Verfahren zum elektronischen Verarbeiten eines Verkehrsdelikts eines Fahrzeugs erreicht, das eine Onboard-Unit mit einem Sendeempfänger, einer Eingabeeinrichtung und einer Ausgabeeinrichtung hat, umfassend:
Senden einer Verkehrsdeliktnachricht von einer Bake an den Sendeempfänger der Onboard-Unit und Ausgeben der Verkehrsdeliktnachricht auf der Ausgabeeinrichtung der Onboard-Unit;
Entgegennehmen einer Benutzerauswahl betreffend zwei Optionen über die Eingabeeinrichtung der Onboard-Unit;
wenn die Benutzerauswahl die erste Option angibt, Senden der Verkehrsdeliktnachricht von der Onboard-Unit an eine entfernte Zentrale, wobei mit der Verkehrsdeliktnachricht eine kryptografische Signatur der Onboard-Unit mitübertragen wird;
wenn die Benutzerauswahl die zweite Option angibt, Erzeugen einer Abbuchungstransaktion betreffend das Verkehrsdelikt und Belasten eines Benutzerkontos mit der Abbuchungstransaktion.

Die Erfindung ermöglicht Verkehrskontrollorganen, beispielsweise Exekutivbeamten, Polizisten, Politessen, Parkraumbeauftragten usw. ein festgestelltes Verkehrsdelikt, wie eine Geschwindigkeits- oder Parkzeitüberschreitung, in Form einer elektronischen Verkehrsdeliknachricht von einer z.B. als Handgerät ausgeführten Bake direkt über Funk oder Infrarot in die Onboard-Unit des Deliktfahrzeugs einzuschreiben. Der Fahrzeugbenutzer erhält die Deliktnachricht auf seiner Onboard-Unit sprachausgegeben oder grafisch angezeigt und kann daraufhin das Delikt über die Eingabeeinrichtung ablehnen oder akzeptieren: In erstem Falle wird die Verkehrsdeliktnachricht an eine Zentrale für eine herkömmliche Deliktbehandlung weitergesandt, beispielsweise zum Ausdrucken und postalischen Versenden eines Strafbescheides an den Benutzer, der dann auch Rechtsmittel dagegen erheben kann. In zweitem Falle, wenn der Benutzer das Delikt akzeptiert, kann er mit Hilfe der Onboard-Unit sofort eine Geldbuße begleichen, indem die Onboard-Unit eine entsprechende Abbuchungstransaktion erzeugt und einem Benutzerkonto anlastet oder dies zumindest veranlasst.

Bevorzugt kann die vom Benutzer getroffene Benutzerauswahl durch Eingabe eines PIN-Codes bestätigt werden, um die Systemsicherheit zu erhöhen; dadurch kann verhindert werden, dass z.B. unberechtigte Personen ein Verkehrsdelikt bestätigen oder ablehnen.

Bevorzugt wird zudem durch die OBU die Verkehrsdeliktnachricht mit einer kryptografischen Signatur signiert und/oder verschlüsselt. Dadurch können authentifizierte Daten für Strafbescheide erzeugt werden, welche höchstmögliche Rechtssicherheit bieten.

Gemäß einer besonders bevorzugten Ausführungsform der Erfindung kann die Benutzerauswahl insbesondere über eine NFC-Verbindung in der Eingabeeinrichtung erfolgen. Beispielsweise kann als Eingabeeinrichtung (und auch Ausgabeeinrichtung) ein Mobiltelefon, Smartphone, PDA, Tablet-PC usw. mit NFC-Chip verwendet werden, und durch Annähern dieses Geräts an eine fahrzeugfeste oder im Fahrzeug montierte OBU kann die Benutzerauswahl getroffen werden. So kann z.B. bloßes Annähern die Benutzerauswahl auf die zweite Option, das Bestätigen des Delikts und Erzeugen einer Abbuchungstransaktion, gesetzt werden.

Die eigentliche Abbuchung vom Benutzerkonto kann auf verschiedenste Art und Weise erfolgen, je nachdem, wo das Benutzerkonto geführt wird. Wenn gemäß einer ersten Ausführungsform der Erfindung das Benutzerkonto in der Onboard-Unit selbst geführt wird, kann die Onboard-Unit auch die Abbuchungstransaktion selbst erzeugen und gleich eine entsprechende Abbuchung vom Benutzerkonto durchführen. Wenn eine NFC-taugliche Eingabeeinrichtung verwendet wird, kann das Benutzerkonto auch auf einem Datenträger geführt werden, der über eine solche NFC-Verbindung belastet wird. Beispielsweise kann eines der genannten Geräte Mobiltelefon, Smartphone usw. als Eingabeeinrichtung verwendet, über das Annähern des Geräts an den restlichen OBU-Teil die NFC-Verbindung geschlossen und z.B. eine Zahlungstransaktion für den Datenträger in diesem Gerät erzeugt oder über eine Mobilfunkverbindung an das Mobilfunknetz abgesetzt und dort die Abbuchungstransaktion einem Benutzerkonto angelastet werden.

Wenn das Benutzerkonto in der Zentrale geführt wird, kann die Onboard-Unit beispielsweise die Verkehrsdeliktnachricht zusammen mit der Benutzerauswahl an die Zentrale senden, damit dort die Abbuchungstransaktion dem Benutzerkonto belastet wird. Alternativ kann, wenn das Benutzerkonto in der Zentrale geführt wird, die Onboard-Unit eine fertige Abbuchungstransaktion an die Zentrale senden, welche dann dort auf das Benutzerkonto angewandt wird.

Eine vorteilhafte Ausführungsform der Erfindung zeichnet sich durch den vorhergehenden Schritt des Sendens eines Status der Onboard-Unit an die Bake und des Erstellens der Verkehrsdeliktnachricht in der Bake abhängig vom empfangenen Status aus. Der Status der Onboard-Unit kann beispielsweise einen Betriebsmodus der Onboard-Unit und/oder des Fahrzeugs betreffen, z.B. Stillstand oder Bewegung, Geschwindigkeit, Betriebsmodus, "Parken", die Bereitschaft, eine bestimmte Parkgebühr zu zahlen, die Beanspruchung einer bestimmten Priorität, z.B. Einsatzfahrzeug, Mehrinsassen-Status für sog. HOV (high occupancy vehicle) Fahrspuren, das Ergebnis einer früheren Mauttransaktion, Parkgebührentransaktion oder Fahrzeugkontrolle usw. Abhängig von dem aus der Onboard-Unit ausgelesenen Status kann der Kontrolleur an der Bake die entsprechende Verkehrsdeliktnachricht zusammenstellen oder die Bake kann diese auch automatisiert, z.B. aufgrund eigener Kontrollmessungen am Fahrzeug oder der OBU, erstellen und die Deliktnachricht in die OBU einschreiben.

Bevorzugt erfolgt die Kommunikation zwischen Bake und Onboard-Unit nach dem DSRC-Standard (dedicated short range communication), beispielsweise den Standards CEN-DSRC mit Funk- oder Infrarotdatenübertragung, ITS-G5, IEEE 802.11p, WLAN (wireless local area network), WAVE (wireless access in vehicular environments), RFID (radio frequency identification), NFC (near field communication) od.dgl.

In einem zweiten Aspekt schafft die Erfindung eine Onboard-Unit für ein Fahrzeug, mit einem Sendeempfänger, einer Eingabeeinrichtung und einer Ausgabeeinrichtung, die dafür ausgebildet ist,
eine Verkehrsdeliktnachricht von einer Bake zu empfangen und auf der Ausgabeeinrichtung auszugeben,
eine Benutzerauswahl betreffend zwei Optionen über die Eingabeeinrichtung entgegenzunehmen,
wenn die Benutzerauswahl die erste Option angibt, die Verkehrsdeliktnachricht an eine entfernte Zentrale zu senden, wobei mit der Verkehrsdeliktnachricht eine kryptografische Signatur der OBU mitübertragen wird, oder
wenn die Benutzerauswahl die zweite Option angibt, die Erzeugung einer Abbuchungstransaktion für ein Benutzerkonto betreffend das Verkehrsdelikt zu veranlassen.

Bevorzugt enthält die Onboard-Unit einen gespeicherten veränderbaren Status und ist dafür ausgebildet, auf eine Funkabfrage hin den Status über den Sendeempfänger an die Bake zu senden. Besonders bevorzugt ist die Onboard-Unit dafür ausgebildet, ein Benutzerkonto zu führen und mit der Abbuchungstransaktion zu belasten.

Hinsichtlich der Vorteile und Merkmale der erfindungsgemäßen Onboard-Unit wird auf die obigen Ausführungen zum Verfahren verwiesen.

Die Erfindung wird nachstehend anhand eines in den beigeschlossenen Zeichnungen dargestellten Ausführungsbeispiels näher erläutert. In den Zeichnungen zeigt:
Fig. 1 die Kommunikation einer Onboard-Unit im Maut-Betriebsmodus mit Maut-Baken auf ihrem Weg auf einer Straße schematisch im Überblick;
Fig. 2 die Kommunikation von Onbard-Units im Park-Betriebsmodus mit einer Park-Bake beim Parken schematisch im Überblick;
Fig. 3 ein Blockschaltbild und Fig. 4 eine Vorderansicht einer beispielhaften Onboard-Unit gemäß der Erfindung;
Fig. 5 ein Zustandsdiagramm eines in einer Onboard-Unit ablaufenden Teils eines Verfahrens zur Erzeugung von Parkgebührentransaktionen;
Fig. 6 ein Flussdiagramm eines in einer Park-Bake ablaufenden Teils eines Verfahrens zur Erzeugung von Parkgebührentransaktionen;
Fig. 7 schematisch eine Straßenverkehrskontrolle, in deren Verlauf ein Teil des erfindungsgemäßen Verfahrens durchgeführt wird; und
Fig. 8 das Verfahren der Erfindung in Form der Signalflüsse zwischen den am Verfahren beteiligten Komponenten.

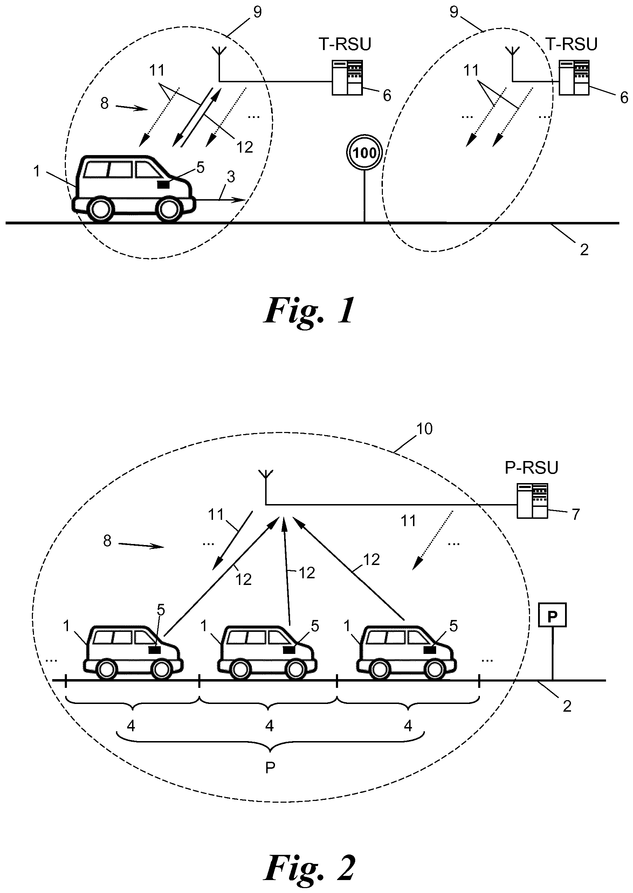

In Fig. 1 bewegt sich ein Fahrzeug 1 auf einer Straße 2 mit einer Geschwindigkeit und Fahrtrichtung 3 und in Fig. 2 parken mehrere Fahrzeuge 1 jeweils auf einem Parkplatz 4 der Straße 2. Die Straße 2 kann eine beliebige Verkehrs- oder Abstellfläche sein, beispielsweise eine Schnellstraße, Autobahn oder ein ganzes Straßennetz in Fig. 1 oder ein Abstellstreifen, eine große Parkfläche oder ein Parkhaus in Fig. 2; all dies wird hier unter dem Oberbegriff "Straße" 2 verstanden.

Die Fahrzeuge 1 sind jeweils mit einer Onboard-Unit (OBU) 5 ausgestattet, welche mit straßenseitigen Baken (roadside units, RSUs) 6, 7 drahtlose Kommunikationen 8 abwickeln können. Die OBUs 5 können eigenständige Geräte oder Bestandteile der Fahrzeugelektronik sein. Die Kommunikationen 8 sind Kurzreichweiten- bzw. DSRC-Funkkommunikationen (dedicated short range communications), bevorzugt nach den Standards CEN-DSRC mit Funk- oder Infrarotdatenübertragung, ITS-G5, IEEE 802.11p, WAVE, WLAN, RFID, NFC od.dgl. Die Baken 6, 7 haben dadurch jeweils einen lokal begrenzten Funk- oder Infrarotabdeckungsbereich 9, 10.

In den Fig. 1 und 2 sind zwei verschiedene Arten von Baken 6, 7 und Anwendungsszenarien der geschilderten Komponenten dargestellt: Die Baken 6 von Fig. 1 sind entlang der Straße 2 geografisch verteilt aufgestellte "Maut"-Baken (tolling roadside units, T-RSUs). Die Maut-Baken 6 fordern mit Hilfe periodisch ausgestrahlter Abfragen 11 alle sie passierenden OBUs 5 zu Kommunikation 8 auf, wie anhand der beispielhaften Antwort 12 veranschaulicht ist. Um aufgrund der möglicherweise hohen Geschwindigkeit der Fahrzeuge 1 keine passierende OBU 5 zu "verpassen", werden die Abfragen 11 der Maut-Baken 6 in verhältnismäßig kurzen Zeitabständen ausgestrahlt, beispielsweise alle 100 ms oder darunter. Für die Abfragen 11 werden im WAVE-Standard beispielsweise sog. WSA-Nachrichten (wave service announcements) und im CEN-DSRC-Standard sog. BST-Nachrichten (beacon service tables) eingesetzt.

Eine erfolgreiche Kommunikation 8 mit einer passierenden OBU 5 belegt, dass sich die OBU 5 im lokal begrenzten Abdeckungsbereich 9 der Maut-Bake 6 befindet, wodurch die Benützung des Orts der Maut-Bake 6 vergebührt ("vermautet") werden kann. Die vermautete Ortsnutzung kann beispielsweise das Befahren eines Straßenstücks, der Eintritt in ein bestimmtes Gebiet ("City Maut") od.dgl. sein.

In dem Park-Szenario von Fig. 2 werden hingegen "Park"-Baken (parking roadside units, P-RSUs) 7 eingesetzt, welche mit einer Abfrage 11, z.B. einer WSA- oder BST-Nachricht, alle in ihrem Abdeckungsbereich 10 befindlichen OBUs 5 zu Antwortnachrichten 12 auffordern, um die Nutzung der Parkplätze 4 zu vergebühren, wie weiter unten noch ausführlich erörtert. Eine Park-Bake 7 kann dabei für einen oder auch mehrere Parkplätze 4 zuständig sein, welche zusammen einen Parkbereich P bilden.

Da parkende Fahrzeuge 1 ruhen, kann eine Park-Bake 7 ihre Abfragen 11 in wesentlich größeren Zeitabständen ΔT aussenden als die Maut-Bake 6 von Fig. 1, beispielsweise alle 10 min, was gleichzeitig die Zeitauflösung der Parkzeitabrechnung definiert.

Der Abdeckungsbereich 10 der Park-Bake 7 kann durch optionale Maßnahmen, beispielsweise Richtantennen, an die räumliche Ausdehnung der Parkplätze 4 angepasst werden, um Antworten 12 von OBUs 5 von nicht-parkenden, z.B. passierenden Fahrzeugen 1 zu vermeiden. Alternativ oder zusätzlich können die OBUs 5 der Fahrzeuge 1 auch in verschiedene, den Szenarien der Fig. 1 und 2 jeweils angepasste Betriebsmodi versetzt werden, und zwar einen ersten Maut-Betriebsmodus (tolling mode, TM) zur Antwort 12 auf Abfragen 11 von Maut-Baken 6, und einen zweiten Park-Betriebsmodus (parking mode, PM) zur Antwort 12 auf Abfragen 11 von Park-Baken 7. Optional können die Baken 6, 7 in den Abfragen 11 jeweils eine Bakenkennung aussenden, die angibt, ob es sich um eine Maut-Bake 6 oder eine Park-Bake 7 handelt. Die Bakenkennung kann beispielsweise als Dienst (service) der Bake im Rahmen einer WSA- oder BST-Nachricht angegeben werden.

Es versteht sich, dass die Maut-Baken 6 und Park-Baken 7 auch durch ein und dieselbe physische Einheit realisiert werden können, welche abwechselnd oder auch gleichzeitig die Funktionen einer Maut- und einer Park-Bake 6, 7 ausübt. So kann eine solche kombinierte Einheit 6, 7 z.B. fortlaufend in kurzen Zeitabständen Abfragen 11 mit Baken-Kennung einer Maut-Bake und in größeren Zeitabständen ΔT, d.h. gelegentlich "eingestreut", Abfragen 11 mit Baken-Kennung einer Park-Bake 7 aussenden. Eine solche Bake 6, 7 ist dann beispielsweise sowohl für das Vermauten eines Straßenstücks der Straße 2 als auch das Vergebühren eines Parkbereichs P zuständig.

Je nach Betriebsmodus TM oder PM, in dem sich eine OBU 5 befindet, und abhängig von der empfangenen Bakenkennung kann die OBU 5 z.B. nur Maut-Baken 6 antworten, wenn sie sich im Maut-Betriebsmodus TM befindet, oder nur Park-Baken 7, wenn sie sich im Park-Betriebsmodus PM befindet.

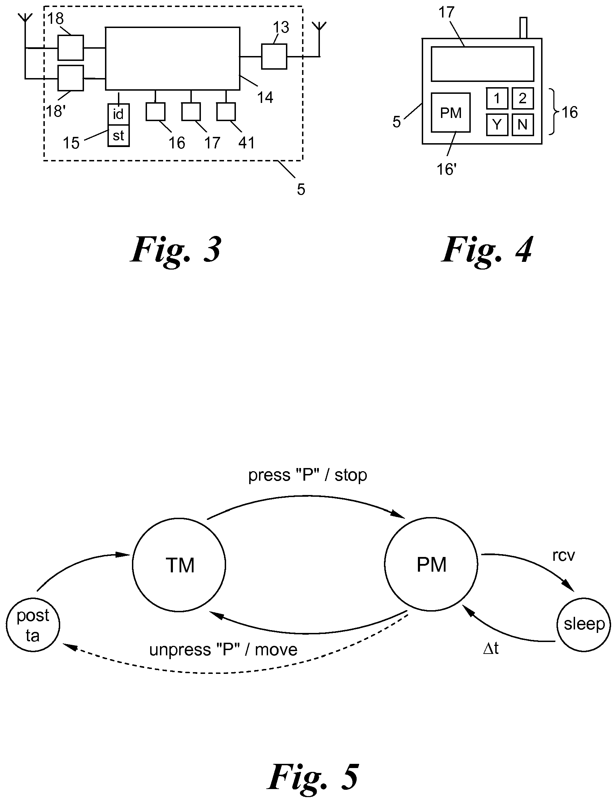

Der Betriebsmodus einer OBU 5 kann ferner als Datennachricht (Status) st kodiert werden und in der Antwort 12 mitgesandt werden. Eine Bake 6, 7 kann den in einer Antwort 12 empfangenen Status st entsprechend auswerten, sodass Maut-Baken 6 nur die Passagen von OBUs 5 vermauten, deren Status st = TM ist, und Park-Baken 7 nur das Parken solcher OBUs 5 vergebühren, deren Status st = PM ist. Ferner können die OBUs 5 auch jeweils ihre eigenen Positionen p messen und an die Park-Baken 7 senden, welche die empfangenen Positionen p mit ihren jeweiligen Parkbereichen P vergleichen und nur das Parken solcher OBUs 5 vergebühren, deren Positionen p in ihren jeweiligen Parkbereich P fallen. Dies wird nun unter Bezugnahme auf die Fig. 3 - 6 näher erläutert.

Fig. 3 zeigt ein beispielhaftes Blockschaltbild, Fig. 4 eine beispielhafte Außenansicht und Fig. 5 ein beispielhaftes Zustandsdiagramm einer OBU 5, welche zwischen (zumindest) zwei Betriebsmodi TM und PM entsprechend den Anwendungsszenarien der Fig. 1 und 2 umschaltbar ist. Gemäß Fig. 3 weist eine OBU 5 dazu einen Sendeempfänger 13 (z.B. nach einem der genannten DSRC-Standards) zur Durchführung der Kommunikationen 8, einen den Sendeempfänger 13 steuernden Mikroprozessor 14, einen Speicher 15, eine Eingabeeinrichtung 16 und eine Ausgabeeinrichtung 17 auf. Die Ein- und Ausgabeeinrichtungen 16, 17 können auch auf andere Weise als durch die dargestellte Tastatur und Bildschirmausgabe realisiert werden können, beispielsweise durch Sprachein- und -ausgabe, Sensoriken, Hinweistöne usw. Die Ein- und Ausgabeeinrichtungen 16, 17 können auch durch physisch getrennte Komponenten wie Autoradios, Navigationsgeräte, Smartphones, PDAs, Tablets usw. gebildet und drahtgebunden oder drahtlos, z.B. über NFC, Bluetooth®, WLAN oder Infrarot, an den Mikroprozessor 14 angebunden sein.

Optional kann die OBU 5 auch einen Bewegungssensor 18 in Form z.B. eines Satellitennavigationsempfängers für ein globales Satellitennavigationssystem (global navigation satellite system, GNSS), wie GPS, GLONASS, GALILEO usw.; anstelle eines GNSS-Empfängers könnte auch jede andere Art von Bewegungssensor 18 verwendet werden, beispielsweise ein Trägheitssensor (inertial measurement unit, IMU) oder ein mit Komponenten des Fahrzeugs 1 verbundener Sensor, beispielsweise eine Anbindung an den Geschwindigkeitsmesser oder Motor des Fahrzeugs 1.

Im einfachsten Fall kann der Bewegungssensor 18 auch eine bloße Anbindung an die Fahrzeugelektronik, z.B. das Zündschloss des Fahrzeugs, sein, so dass z.B. die Schlüsselstellung (Motor läuft - läuft nicht) den (voraussichtlichen) Bewegungs- bzw. Parkstatus des Fahrzeugs angibt.

Die OBU 5 kann optional weiters mit einer Positionsbestimmungseinrichtung 18' ausgestattet sein, welche befähigt ist, die aktuelle Position p der OBU 5 - auf Abfrage, periodisch oder fortlaufend - zu bestimmen. Die Positionsbestimmungseinrichtung 18' kann auf jede in der Technik bekannte Art arbeiten, z.B. mittels Funktriangulation in einem Netz geografisch verteilter Funkstationen, die z.B. durch die Baken 6, 7 selbst oder Basisstationen eines Mobilfunknetzes gebildet sein können, oder mittels Auswertung der Zellkennungen eines zellularen Mobilfunknetzes, usw. usf. Bevorzugt ist die Positionsbestimmungseinrichtung 18' ein Satellitennavigationsempfänger zur Positionsbestimmung in einem GNSS und kann insbesondere auch durch denselben GNSS-Empfänger gebildet sein, der für den Bewegungssensor 18 verwendet wird.

Der Speicher 15 der OBU 5 enthält - neben den entsprechenden Anwendungs- und Steuerungsprogrammen und -daten - eine eindeutige Kennung id der OBU 5, welche beispielsweise bei der Ausgabe oder benutzerspezifischen Initialisierung der OBU 5 festgelegt und eingespeichert wird und die OBU 5 und/oder ihren Benutzer und/oder das Fahrzeug 1 und/oder ein Abrechnungskonto des Benutzers eindeutig identifiziert. Die OBU-Kennung id wird in jeder Antwortnachricht 12 von der OBU 5 an ein Bake 6, 7 mitgesandt, um die OBU 5 gegenüber der Bake 6, 7 eindeutig zu identifizieren.

Der Speicher 15 kann ferner den Status st enthalten, welcher den Betriebsmodus TM oder PM der OBU 5 für das entsprechende Szenario von Fig. 1 oder 2 angibt. Der Status st kann sowohl in Abhängigkeit von einer vom Bewegungssensor 18 gemessenen Bewegung (oder Nicht-Bewegung) der OBU 5 als auch durch eine Benutzerauswahl über die Eingabeeinrichtung 16 verändert bzw. eingestellt werden. Die Eingabeeinrichtung 16 kann dazu beispielsweise eine einrastbare Taste 16' (Fig. 4) enthalten, die mit "PM" für "Park-Betriebsmodus" PM beschriftet ist und durch Drücken und Einrasten die OBU 5 in den Park-Betriebsmodus PM umschaltet und den Status st auf den Wert "PM" setzt. Durch Lösen bzw. Ausrasten der Taste 16' wird die OBU 5 wieder zurück in den Maut-Betriebsmodus TM geschaltet und der Status st auf den Wert "TM" gesetzt. Die Ausgabeeinrichtung 17 kann optional entsprechende Hinweis- und/oder Bestätigungsmeldungen ausgeben.

Fig. 5 zeigt einige der möglichen Betriebszustände der OBU 5 nochmals im Detail in Form eines Zustandsdiagramms (state transition-diagram). Aus dem Maut-Betriebsmodus TM kann die OBU 5 durch Drücken der Taste 16' und/oder wenn der Bewegungssensor 18 über eine Mindestzeitspanne von z.B. 5 min keine Bewegung der OBU 5 feststellt in den Park-Betriebsmodus PM versetzt werden. Durch Lösen der Taste 16' und/oder eine vom Bewegungssensor 18 detektierte Bewegung der OBU 5 kann diese vom Park-Betriebsmodus PM wieder zurück in den Maut-Betriebsmodus TM versetzt werden.

Im Park-Betriebsmodus PM kann die OBU 5 vorübergehend in einen stromsparenden Schlafmodus ("sleep") verfallen, und zwar sobald sie eine Abfrage 11 einer Park-Bake 7 empfangen und mit einer Antwort 12 beantwortet hat. Die OBU 5 kann aus dem Schlafmodus nach Ablauf einer vorgegebenen Zeitspanne Δt aufwachen und in den Park-Betriebsmodus PM zurückkehren. Die Zeitspanne Δt ist bevorzugt kürzer als jene Zeitspanne ΔT, die zwischen aufeinanderfolgenden Funkabfragen 11 einer Park-Bake 7 liegt. Alternativ oder zusätzlich könnte die OBU 5 auch durch den Empfang einer nächsten Funkabfrage 11 wieder aufgeweckt werden.

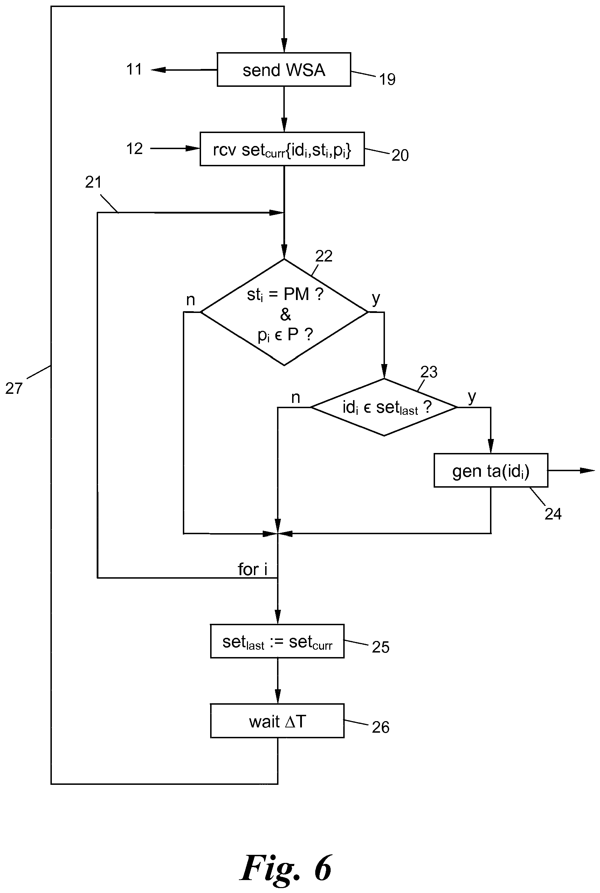

Fig. 6 zeigt das in einer Park-Bake 7 im Zusammenspiel mit der OBU 5 der Fig. 3 - 5 ablaufende Verfahren zur Erzeugung von Parkgebührentransaktionen in dem Anwendungsszenario von Fig. 2.

In einem ersten Schritt 19 wird eine Abfrage 11 von der Park-Bake 7 ausgesandt, um die in ihrem Abdeckungsbereich 10 befindlichen OBUs 5 zu Antworten 12 aufzufordern. Im Schritt 20 werden die von den OBUs 5 einlangenden Antworten 12 empfangen, wobei jede Antwort 12 zumindest die jeweilige Kennung idᵢ der OBU 5 mit dem Index i und - optional - deren Status stᵢ und/oder deren von der Positionsbestimmungseinrichtung 18' bestimmte Position pᵢ enthält. Die empfangenen Kennungen idᵢ, Stati stᵢ und Positionen pᵢ werden als aktueller Datensatz set-_{curr} in der Park-Bake 7 vorübergehend gespeichert.

Anschließend wird innerhalb einer über alle empfangenen Kennungen idᵢ laufenden Schleife 21 überprüft, ob der jeweilige Status stᵢ auf Park-Betriebsmodus "PM" gesetzt ist oder nicht, siehe Entscheidung 22. In der Entscheidung 22 kann zusätzlich (oder alternativ) überprüft werden, ob die jeweilige Position pᵢ - soferne sie übermittelt wurde - in einen vorgegebenen geografischen Bereich, u.zw. den Parkbereich P der Park-Bake 7, fällt oder nicht. Wenn nicht alle in der Entscheidung 22 überprüften Bedingungen erfüllt sind (Zweig "n" von 22), werden die nachfolgenden Schritte 23 und 24 übersprungen und die Schleife 21 wird fortgesetzt bzw. bei Beendigung zu Schritt 25 hin verlassen. Wenn hingegen alle Bedingungen erfüllt sind, d.h. hier: stᵢ = PM und pᵢ ∈ P (Zweig "y" von 22), wird in einer weiteren Entscheidung 23 überprüft, ob die jeweilige Kennung idᵢ einer zuvor gespeicherten "alten" Kennung id_{i, last} entspricht, d.h. in einem Datensatz setₗₐₛₜ{id_{i,last}} von alten Kennungen id_{i,last} vorkommt oder nicht. Diese "alten" Kennungen id_{i,last} wurden in einem früheren Verfahrensdurchlauf ermittelt und im Datensatz setₗₐₛₜ gespeichert, wie gleich im Anschluss erläutert wird.

Wenn die jeweilige aktuelle Kennung idᵢ *keiner* alten Kennung id_{i,last} entspricht, d.h. *nicht* im Datensatz setₗₐₛₜ vorkommt (Zweig "n" von 23), wird die Schleife 21 fortgesetzt bzw. nach ihrer Fertigstellung zu Schritt 25 hin verlassen; wenn doch (Zweig "y" von 23), wird zum Schritt 24 verzweigt, in welchem eine Parkgebührentransaktion ta(idᵢ) für die aktuelle Kennung idᵢ erzeugt wird, wie später noch ausführlicher erläutert.

Nach dem Schritt 24 wird die Schleife 21 fortgesetzt bzw. nach deren Vollendung zu Schritt 25 übergegangen.

Im Schritt 25 werden nun die im Schritt 20 ermittelten aktuellen Kennungen idᵢ als "alte" Kennungen id_{i,last} umgespeichert, d.h. der aktuelle Datensatz set_{curr} als (nun) "alter" Datensatz setₗₐₛₜ gespeichert.

Anschließend wird in Schritt 26 die vorgegebene Zeitspanne ΔT abgewartet, welche zwischen den einzelnen Abfragen 11 der Park-Bake 7 liegt, und dann das Verfahren wiederholt (Schleife 27).

Bei der nächsten Wiederholung in der Schleife 27 stellen nun die vorher ermittelten aktuellen Kennungen idᵢ die "alten" Kennungen id_{i,last} dar, und wenn im Schritt 20 wieder "neue" aktuelle Kennungen idᵢ ermittelt werden, können diese dann in Schritt 23 mit den "alten" Kennungen id_{i,last} aus dem letzten Datensatz setₗₐₛₜ verglichen werden. Dadurch wird bei jedem Schleifendurchlauf 27 überprüft, ob eine von einer Park-Bake 7 aufgrund einer Abfrage 11 ermittelte OBU-Kennung idᵢ schon bei einer um die Zeitspanne ΔT zurückliegenden Abfrage 11 vorhanden war oder nicht; wenn ja, hat ein Fahrzeug 1 mit einer OBU 5 dieser Kennung ist; offensichtlich mindestens die Zeitspanne ΔT im Abdeckungsbereich 10 der Park-Bake 7 verbracht, sodass für das Parken über die Zeitspanne ΔT eine entsprechende Parkgebührentransaktion ta(idᵢ) für die OBU-Kennung idᵢ erzeugt werden darf (Schritt 24).

Die in Schritt 24 erzeugten Parkgebührentransaktionen ta(idᵢ) können von der Bake 7 selbst abgerechnet werden, beispielsweise indem ein in der Bake 7 geführtes Benutzerkonto damit belastet wird. Alternativ können die Parkgebührentransatkionen ta(idᵢ) von der Bake 7 an eine entfernte (nicht dargestellte) Zentrale weitergesandt werden, welche Benutzerkonten, Mautkonten, Bankkonten, Kreditkonten usw. unter den Kennungen idᵢ führt, sodass die Parkgebührentransaktionen ta(idᵢ) dort einem entsprechenden Abrechnungskonto angelastet werden können. Es ist aber auch möglich, dass die erzeugte(n) Parkgebührentransaktion(en) ta(idᵢ) von der Bake 7 an die OBU 5 mit der Kennung idᵢ zurückgesandt und dort einem in der OBU 5 geführten Abrechnungskonto (einer "elektronischen Geldbörse") angelastet wird/werden.

Eine weitere Möglichkeit ist, dass die von der Park-Bake 7 an die OBU 5 zurückgesandte(n) Parkgebührentransaktion(en) ta(idᵢ) in der OBU 5 vorübergehend aufbewahrt und dann, wenn die OBU 5 wieder in den Maut-Betriebsmodus TM zurückkehrt, von der OBU 5 an eine Maut-Bake 6 auf ihrem Weg zwecks Verrechnung abgesetzt wird/werden, gleichsam wie eine Mautgebührentransaktion. Fig. 5 zeigt dazu einen entsprechenden Betriebsmodus "post ta", in welchem die OBU 5 nach Rückkehr aus dem Park-Betriebsmodus PM vorübergehend eintritt und auf die nächste Maut-Bake 6 auf ihrem Weg wartet, um bei dieser die Parkgebührentransaktion(en) ta(idᵢ) abzuliefern, wonach sie wieder in den "normalen" Maut-Betriebsmodus TM zurückkehrt.

Es versteht sich, dass die in Fig. 6 gezeigten Abläufe gemäß dem Fachmann bekannten Programmiermethoden entsprechend abgewandelt werden können. So könnte beispielsweise die Entscheidung 22 entfallen oder in den Schritt 20 mitaufgenommen und dort überprüft werden, ob der Status stᵢ einer Kennung idᵢ auf "PM" steht und/oder die Position pᵢ einer Kennung idᵢ in den Bereich P fällt, wobei dann überhaupt nur solche Kennungen idᵢ als aktuelle Kennungen im aktuellen Datensatz set_{curr} gespeichert werden, deren Status stᵢ = "PM" bzw. Position pᵢ ∈ P ist. Auch könnte die Schleife 21 anders implementiert werden und es könnten beispielsweise sofort nach Empfang einer Antwort 12 für eine Kennung idᵢ die Schritte 22 - 24 bzw. 23 - 24 durchgeführt werden, wenn dies rechentechnisch so schnell vonstatten geht, dass dies zwischen aufeinanderfolgend eintreffenden Antworten 12 durchgeführt werden kann. Dazu ist anzumerken, dass nach manchen DSRC-Standards die Antworten 12 von mehreren OBUs 5, die auf eine gemeinsame Funkabfrage 11 replizieren, variabel zeitlich gestreut werden, um Kollisionen von Antworten 12 zu vermeiden, so dass zwischen einzelnen Antworten 12 durchaus genügend Zeit für die Schritte 22 - 24 bzw. 23 - 24 verbleiben kann.

Eine Park-Bake 7, in deren Abdeckungsbereich 10 mehrere Parkplätze 4 fallen, erhält durch die Antworten 12 der OBUs 5 im Schritt 20 gleichzeitig auch eine vollständige Übersicht über den Belegungsstatus der Parkplätze 4 in ihrem Parkbereich P. Dazu braucht sie lediglich die Anzahl an im Schritt 20 erhaltenen Kennungen idᵢ mit der Anzahl an Parkplätzen 4 im Bereich P zu vergleichen, um eine anteilige bzw. prozentuelle Auslastung ihrer Parkplätze 4 zu erhalten, z.B. "80%", wenn 4 von 5 Parkplätzen belegt sind, usw. usf. Der so ermittelte Parkplatzbelegungsstatus kann beispielsweise an eine Zentrale für Parkraumbewirtschaftungsmaßnahmen gesendet werden.

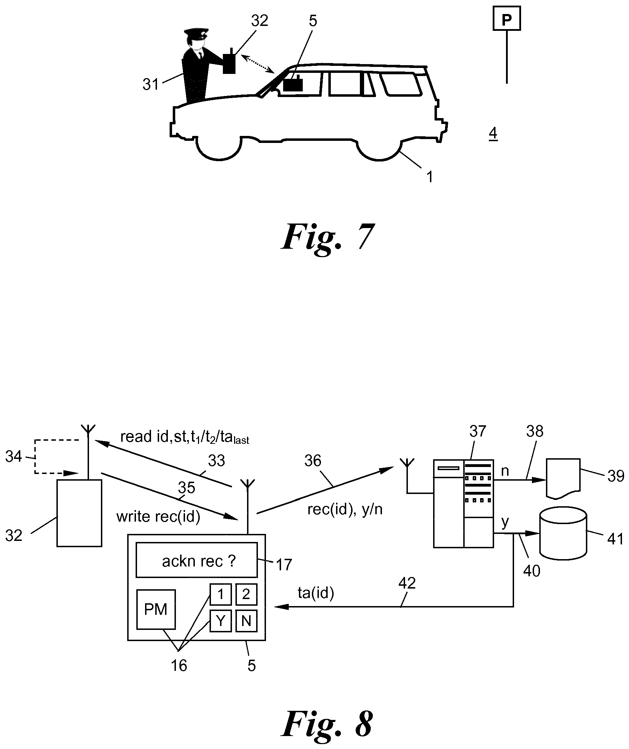

Fig. 7 zeigt einen ersten Teil des Verfahrens zum elektronischen Verarbeiten von Verkehrsdelikten anhand eines Kontrollszenarios, in welchem eine Kontrollperson 31 mit Hilfe einer transportablen, beispielsweise als Handgerät ausgeführten Bake 32 ein Fahrzeug 1 mit seiner OBU 5 kontrolliert. Das Fahrzeug 1 ist in dem gezeigten Beispiel auf einem Parkplatz 4 geparkt. In der OBU 5 wurde vom Benutzer der Park-Betriebsmodus PM eingestellt, d.h. der Status st im Speicher 15 der OBU 5 steht entsprechend auf "PM". Mit Hilfe der OBU 5 und einer der beschriebenen Park-Baken 7 werden beispielsweise entsprechende Parkgebührentransaktion ta erzeugt, wie anhand der Fig. 1 - 6 beschrieben wurde.

Die Kontrollperson 31 führt nun mit Hilfe der Bake 32 eine Straßenverkehrskontrolle durch. Im dargestellten Beispiel überprüft sie die korrekte Einstellung des Park-Betriebsmodus PM in der OBU 5.

Wie in Fig. 8 gezeigt, werden dazu in einem ersten Schritt 33 die Kennung id und (optional) der Status st der OBU 5 des kontrollierten Fahrzeugs 1 über eine Kommunikation 8 in die Bake 32 hin ausgelesen. Optional können auch weitere Daten wie Startzeit t₁ eines Parkvorgangs (Zeitpunkt des Eintritts in den Park-Betriebsmodus PM), maximal zulässige Parkdauer an diesem Ort in Form eines Zeitfensters oder einer zulässigen Endzeit t₂, eine oder mehrere der letzten in der OBU 5 verarbeiteten Parkgebührentransaktionen taₗₐₛₜ, bereits früher in der OBU 5 gespeicherte Verkehrsdeliktnachrichten, od.dgl. mit ausgelesen werden.

In einem Schritt 34 wird nun abhängig von der in der Bake 32 empfangenen Information, beispielsweise ob der Status st auf einem Parkplatz 4 vom Benutzer korrekt auf "PM" gestellt wurde, anhand eines visuellen Vergleichs durch die Kontrollperson 31 - oder auch teilweise bzw. ganz automatisiert von der Bake 32 selbst, wenn diese entsprechende Sensoren hat - eine Verkehrsdeliktnachricht rec zusammengestellt. Wenn die Bake 32 Schritt 34 antonom durchführt, kann sie anstelle als Handgerät auch beispielsweise ortsfest aufgestellt sein oder von einem Patrouillenfahrzeug mitgeführt werden. Auch ist es möglich, dass die Bake 32 in Form einer der Baken 6 oder 7 realisiert ist und Verkehrsdeliktnachrichten rec z.B. bei Geschwindigkeitsüberschreitungen, Zeitüberschreitungen in einer Kurzparkzone bzw. bei zeitlich begrenzten Halteverboten usw. erzeugt.

Die Verkehrsdeliktnachricht rec wird anschließend in einem Schritt 35 in einer Kommunikation 8 an die OBU 5 gesandt und dort auf deren Ausgabeeinrichtung 17 für den Benutzer des Fahrzeugs 1 ausgegeben, z.B sprachausgegeben oder grafisch angezeigt. Der Benutzer des Fahrzeugs 1 kann nun über die Eingabeeinrichtung 16, z.B. Spracheingabe oder Tastatur, das Verkehrsdelikt zur Bezahlung akzeptieren ("y") oder nicht ("n") und eine entsprechende Benutzerauswahl y/n treffen. Ergänzend kann im Akzeptanzfall "y" zusätzlich die Eingabe eines PIN-Codes gefordert werden, um die Zahlungssicherheit weiter zu erhöhen (z.B. um Fremdwahl bei offenen Cabrios oder von nicht kontozugriffsberechtigten Fahrzeugbenutzern in Mietwagen zu verhindern.

Wenn die Ein- und Ausgabeeinrichtungen 16, 17 beispielsweise als Smartphone mit NFC-Anbindung ausgeführt sind, kann z.B. durch eine bloße Annäherung des Smartphones an den Prozessorteil der OBU 5 das Delikt akzeptiert und ein Zahlungsvorgang ausgelöst werden.

Die Benutzerauswahl y/n wird anschließend in einem Schritt 36 zusammen mit der Verkehrsdeliktnachricht rec und der Kennung id der OBU 5 über den Sendeempfänger 13 - oder einen anderen Sendeempfänger der OBU 5, beispielsweise ein Mobilfunkmodul oder via WAVE/WLAN-Zugang der verteilten Baken - an eine entfernte Zentrale 37 gesandt. Die Zentrale 37 kann beliebiger Art sein, beispielsweise eine mit den Baken 6, 7 und/oder 32 drahtlos oder drahtgebunden in Verbindung stehende Zentrale eines Straßenmautsystems, Parkgebührenabrechnungssystems, ein Bankrechner, ein Kreditkartenkontorechner usw. Die Zentrale 37 kann sogar durch eine der Baken 6, 7 oder 32 selbst realisiert sein.

Wenn die Benutzerauswahl y/n die Ablehnung des angezeigten Verkehrsdelikts betraf ("n"), wird anschließend in einem Schritt 38 aus der Verkehrsdeliktnachricht rec(id) ein "herkömmliches" Strafmandat 39 erstellt, beispielsweise ausgedruckt und auf postalischem Wege mit einer Rechtsbelehrung an den Benutzer des Fahrzeugs 1 versandt.

Bei der Übermittlung der Benutzerauswahl y/n in Schritt 30 kann optional die Authentizität des Benutzers durch zusätzliche Übermittlung einer in der OBU 5 gespeicherten kryptografischen OBU-Signatur geprüft werden und/oder die OBU 5 die Benutzerauswahl y/n und/oder die Verkehrsdeliktnachricht rec(id) mit der OBU-Signatur und/oder einem OBU-Schlüssel signieren und/oder verschlüsseln. Damit können gerichtsfeste Datensätze der Benutzerinteraktion erzeugt werden.

Wenn die Benutzerauswahl y/n die Akzeptanz des Verkehrsdelikts betraf ("y"), wird im Schritt 40 aus der Verkehrsdeliktnachricht rec(id) eine Abbuchungstransaktion ta(id) erzeugt und einem Benutzerkonto 41 angelastet, beispielsweise indem eine in der Verkehrsdeliktnachricht rec(id) angegebene Geldbuße vom Benutzerkonto 41 abgebucht wird. Alternativ oder zusätzlich kann die Abbuchungstransaktion ta(id) im Schritt 42 auch über eine Kommunikation 8 an die OBU 5 zurückgesandt werden und dort einem in der OBU 5 selbst geführten Benutzerkonto (einer "elektronischen Geldbörse") angelastet werden. Auch könnte das Benutzerkonto 41 in einem Teil der Ein- und Ausgabeeinrichtung 16, 17 geführt werden, beispielsweise wenn diese ev. durch ein drahtlos, z.B. über NFC, Bluetooth^{®} usw., angebundenes mobiles Endgerät wie ein Mobiltelefon, Smartphone, PDA, Tablet-PC usw. realisiert wird. In diesem Fall kann die OBU 5 so programmiert sein, dass zum Belasten des Benutzerkontos 41 eine entsprechende Nachricht an diesen drahtlos angebundenen Teil der Ein- und Ausgabeeinrichtung 16, 17 gesandt wird und dort z.B. ein Benutzerkonto 41 in diesem Endgerät belastet oder von letzterem die Abbuchungstransaktion ta(id) weitergesandt wird, z.B. an eine Abrechungszentrale eines Mobilfunknetzes.

Alternativ ist es möglich, dass die Abbuchungstransaktion ta(id) gleich direkt in der OBU 5 aus der Verkehrsdeliktnachricht rec(id) erzeugt und einem in der OBU 5 geführten Benutzerkonto 41 angelastet wird, in welchem Fall Schritt 36, das Weiterleiten der Verkehrsdeliktnachricht rec(id), nur im Falle der Ablehnung ("n") des Verkehrsdelikts erforderlich ist; oder dass eine in der OBU 5 direkt erzeugte Abbuchungstransaktion ta(id) im Schritt 36 - anstelle der Deliktnachricht rec(id) - an die Zentrale 37 zur Verarbeitung gesandt wird.

Wird nach längerer Zeit, z.B. 1 Monat, vom Benutzer keine Benutzerauswahl y/n eingegeben, kann die Benutzerauswahl y/n von der OBU 5 selbst auf einen vorbestimmten Wert gesetzt und dementsprechend weiterbehandelt werden. Vorzugsweise wird die Benutzerauswahl dann auf den Wert "n" gesetzt, um nicht von einem falschen Konto abzubuchen oder einen verfrühten Fristenablauf bei einem Strafmandat zu verursachen.

Nach Eingabe der Benutzerauswahl y/n in die OBU 5 wird die Verkehrsdeliktnachricht rec(id) in der OBU 5 gelöscht oder als bearbeitet markiert.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zum elektronischen Verarbeiten eines Verkehrsdelikts (rec) eines Fahrzeugs (1), das eine Onboard-Unit (5) mit einem Sendeempfänger (13), einer Eingabeeinrichtung (16) und einer Ausgabeeinrichtung (17) hat, umfassend:
Senden einer Verkehrsdeliktnachricht (rec) von einer Bake (32) an den Sendeempfänger (13) der Onboard-Unit (5) und Ausgeben der Verkehrsdeliktnachricht (rec) auf der Ausgabeeinrichtung (17) der Onboard-Unit (5);
Entgegennehmen einer Benutzerauswahl (y/n) betreffend zwei Optionen über die Eingabeeinrichtung (16) der Onboard-Unit (5);
wenn die Benutzerauswahl (y/n) die erste Option (n) angibt, Senden der Verkehrsdeliktnachricht (rec) von der Onboard-Unit (5) an eine entfernte Zentrale (37), wobei mit der Verkehrsdeliktnachricht (rec) eine kryptografische Signatur der Onboard-Unit (5) mitübertragen wird;
wenn die Benutzerauswahl (y/n) die zweite Option (y) angibt, Erzeugen einer Abbuchungstransaktion (ta) betreffend das Verkehrsdelikt (rec) und Belasten eines Benutzerkontos (41) mit der Abbuchungstransaktion (ta).

2. Verfahren nach Anspruch 1, **dadurch gekennzeichnet, dass** die Benutzerauswahl (y/n) durch Eingabe eines PIN-Codes bestätigt werden muss.

3. Verfahren nach Anspruch 1 oder 2, **dadurch gekennzeichnet, dass** die Onboard-Unit (5) die Verkehrsdeliktnachricht (rec) mit der kryptografischen Signatur signiert und/oder verschlüsselt.

4. Verfahren nach einem der Ansprüche 1 bis 3, **dadurch gekennzeichnet, dass** die Benutzerauswahl (y/n) über eine NFC-Verbindung in der Eingabeeinrichtung (16) erfolgt.

5. Verfahren nach einem der Ansprüche 1 bis 4, **dadurch gekennzeichnet, dass** das Benutzerkonto (41) in der Onboard-Unit (5) geführt und die Abbuchungstransaktion (ta) in der Onboard-Unit (5) erzeugt wird.

6. Verfahren nach einem der Ansprüche 1 bis 4, **dadurch gekennzeichnet, dass** das Benutzerkonto (41) auf einem Datenträger geführt wird, welcher über eine NFC-Verbindung belastet wird.

7. Verfahren nach einem der Ansprüche 1 bis 4, **dadurch gekennzeichnet, dass** das Benutzerkonto (41) in der Zentrale (37) geführt wird und die Verkehrsdeliktnachricht (rec) zusammen mit der Benutzerauswahl (y/n) an die Zentrale (37) gesandt und dort die Abbuchungstransaktion (ta) erzeugt wird.

8. Verfahren nach einem der Ansprüche 1 bis 4, **dadurch gekennzeichnet, dass** das Benutzerkonto (41) in der Zentrale (37) geführt wird und die Abbuchungstransaktion (ta) in der Onboard-Unit (5) erzeugt und an die Zentrale (37) gesandt wird.

9. Verfahren nach einem der Ansprüche 1 bis 8, **gekennzeichnet durch** den vorhergehenden Schritt des Sendens eines Status (st) der Onboard-Unit (5) an die Bake (32) und des Erstellens der Verkehrsdeliktnachricht (rec) in der Bake (32) abhängig vom empfangenen Status (st).

10. Verfahren nach einem der Ansprüche 1 bis 9, **dadurch gekennzeichnet, dass** die Kommunikation (8) zwischen Bake (32) und Onboard-Unit (5) nach dem DSRC-Standard erfolgt.

11. Onboard-Unit für ein Fahrzeug, mit einem Sendeempfänger (13), einer Eingabeeinrichtung (16) und einer Ausgabeeinrichtung (17), wobei die Onboard-Unit (5) dafür ausgebildet ist,
eine Verkehrsdeliktnachricht (rec) von einer Bake (32) zu empfangen und auf der Ausgabeeinrichtung (17) auszugeben,
eine Benutzerauswahl (y/n) betreffend zwei Optionen über die Eingabeeinrichtung (17) entgegenzunehmen,
**dadurch gekennzeichnet, dass** die Onboard-Unit (5) ferner dafür ausgebildet ist,
wenn die Benutzerauswahl (y/n) die erste Option (n) angibt, die Verkehrsdeliktnachricht (rec) an eine entfernte Zentrale (37) zu senden, wobei mit der Verkehrsdeliktnachricht (rec) eine kryptografische Signatur der Onboard-Unit (5) mitübertragen wird, oder
wenn die Benutzerauswahl (y/n) die zweite Option (y) angibt, die Erzeugung einer Abbuchungstransaktion (ta) für ein Benutzerkonto (41) betreffend das Verkehrsdelikt (rec) zu veranlassen.

12. Onboard-Unit nach Anspruch 11, **dadurch gekennzeichnet, dass** sie dafür ausgebildet ist, die Verkehrsdeliktnachricht (rec) mit der kryptografischen Signatur zu signieren und/oder verschlüsseln.

13. Onboard-Unit nach Anspruch 11 oder 12, **dadurch gekennzeichnet, dass** sie einen gespeicherten veränderbaren Status (st) enthält und dafür ausgebildet ist, auf eine Funkabfrage (33) hin den Status (st) über den Sendeempfänger (13) an die Bake (32) zu senden.

14. Onboard-Unit nach einem der Ansprüche 11 bis 13, **dadurch gekennzeichnet, dass** die Onboard-Unit (5) dafür ausgebildet ist, ein Benutzerkonto (41) zu führen und mit der Abbuchungstransaktion (ta) zu belasten.

15. Onboard-Unit nach einem der Ansprüche 11 bis 14, **dadurch gekennzeichnet, dass** der Sendeempfänger (13) ein DSRC-Sendeempfänger ist.

## Claims

1. A method for electronically processing a traffic violation (rec) of a vehicle (1) which has an onboard unit (5) having a transceiver (13), an input device (16) and an output device (17), comprising:
transmitting a traffic violation message (rec) from a beacon (32) to the transceiver (13) of the onboard unit and outputting the traffic violation message (rec) on the output device (17) of the onboard unit (5);
accepting a user selection (y/n) related to two options via the input device (16) of the onboard unit (5);
if the user selection (y/n) indicates the first option (n), transmitting the traffic violation message (rec) from the onboard unit (5) to a remote central facility (37), wherein a cryptographic signature of the onboard unit (5) is transmitted together with the traffic violation message (rec);
if the user selection (y/n) indicates the second option (y), generating a debit transaction (ta) related to the traffic violation (rec) and charging the debit transaction (ta) against a user account (41).

2. The method according to claim 1, **characterized in that** the user selection (y/n) must be confirmed by entering a PIN code.

3. The method according to claim 1 or 2, **characterized in that** the onboard unit (5) signs and/or encrypts the traffic violation message (rec) with the cryptographic signature.

4. The method according to any one of claims 1 to 3, **characterized in that** the user selection (y/n) takes place by way of an NFC connection in the input device (16).

5. The method according to any one of claims 1 to 4, **characterized in that** the user account (41) is kept in the onboard unit (5) and the debit transaction (ta) is generated in the onboard unit (5).

6. The method according to any one of claims 1 to 4, **characterized in that** the user account (41) is kept on a data carrier, which is debited via an NFC connection.

7. The method according to any one of claims 1 to 4, **characterized in that** the user account (41) is kept in the central facility (37), and the traffic violation message (rec) is transmitted together with the user selection (y/n) to the central facility (37), where the debit transaction (ta) is generated.

8. The method according to any one of claims 1 to 4, **characterized in that** the user account (41) is kept in the central facility (37) and the debit transaction (ta) is generated in the onboard unit (5) and transmitted to the central facility (37).

9. The method according to any one of claims 1 to 8, **characterized by** the preceding step of transmitting a status (st) of the onboard unit (5) to the beacon (32) and creating the traffic violation message (rec) in the beacon (32) depending on the received status (st).

10. The method according to any one of claims 1 to 9, **characterized in that** the communication (8) between the beacon (32) and the onboard unit (5) takes place according to the DSRC standard.

11. An onboard unit for a vehicle, comprising a transceiver (13), an input device (16) and an output device (17), wherein the onboard unit (5) is configured:
to receive a traffic violation message (rec) from a beacon (32) and output it on the output device (17),
to accept a user selection (y/n) concerning two options via the input device (17),
**characterized in that** the onboard unit is further configured
if the user selection (y/n) indicates the first option (n), to transmit the traffic violation message (rec) to a remote central facility (37), wherein a cryptographic signature of the onboard unit (5) is transmitted together with the traffic violation message (rec), or
if the user selection (y/n) indicates the second option (7), to initiate the generation of a debit transaction (ta) for a user account (41) related to the traffic violation (rec).

12. Onboard unit according to claim 11, **characterized in that** it is configured to sign and/or encrypt the traffic violation message (rec) with the cryptographic signature.

13. The onboard unit according to claim 11 or 12, **characterized by** comprising a stored modifiable status (st) and being configured to transmit the status (st) via the transceiver (13) to the beacon (32) in response to a wireless poll (33).

14. The onboard unit according to any one of the claims 11 to 13, **characterized in that** the onboard unit (5) is configured to keep a user account (41) and charge the debit transaction (ta) against the same.

15. The onboard unit according to any one of claims 11 to 14, **characterized in that** the transceiver (13) is a DSRC transceiver.

## Revendications

1. Procédé de traitement électronique d'une infraction routière (rec) d'un véhicule (1), qui a une unité embarquée (5) avec un émetteur-récepteur (13), un dispositif d'entrée (16) et un dispositif de sortie (17), comprenant :
l'envoi d'un message d'infraction routière (rec) à partir d'une balise (32) vers l'émetteur-récepteur (13) de l'unité embarquée (5) et la délivrance du message d'infraction routière (rec) au dispositif de sortie (17) de l'unité embarquée (5) ;
l'acceptation d'un choix d'utilisateur (y/n) concernant deux options par l'intermédiaire du dispositif d'entrée (16) de l'unité embarquée (5) ;
lorsque le choix d'utilisateur (y/n) indique la première option (n), l'envoi du message d'infraction routière (rec) de l'unité embarquée (5) vers une centrale (37) éloignée, où une signature cryptographique de l'unité embarquée (5) est transmise conjointement avec le message d'infraction routière (rec) ;
lorsque le choix d'utilisateur (y/n) indique la seconde option (y), la création d'une transaction de prélèvement (ta) concernant l'infraction routière (rec) et l'imputation de la transaction de prélèvement (ta) sur un compte d'utilisateur (41).

2. Procédé selon la revendication 1, **caractérisé en ce que** le choix d'utilisateur (y/n) doit être confirmé par l'indication d'un code PIN.

3. Procédé selon la revendication 1 ou 2, **caractérisé en ce que** l'unité embarquée (5) signe et/ou encode le message d'infraction routière (rec) avec une signature cryptographique.

4. Procédé selon l'une des revendications 1 à 3, **caractérisé en ce que** le choix d'utilisateur (y/n) est effectué par l'intermédiaire d'une liaison NFC dans le dispositif d'entrée (16).

5. Procédé selon l'une des revendications 1 à 4, **caractérisé en ce que** le compte d'utilisateur (41) est géré dans l'unité embarquée (5) et la transaction de prélèvement (ta) est créée dans l'unité embarquée (5).

6. Procédé selon l'une des revendications 1 à 4, **caractérisé en ce que** le compte d'utilisateur (41) est géré sur un support de données, lequel est imputé par l'intermédiaire d'une liaison NFC.

7. Procédé selon l'une des revendications 1 à 4, **caractérisé en ce que** le compte d'utilisateur (41) est géré dans la centrale (37) et le message d'infraction routière (rec) est envoyé ensemble avec le choix d'utilisateur (y/n) vers la centrale (37) et la transaction de prélèvement (ta) y est générée.

8. Procédé selon l'une des revendications 1 à 4, **caractérisé en ce que** le compte d'utilisateur (41) est géré dans la centrale (37) et la transaction de prélèvement (ta) est générée dans l'unité embarquée (5) et est envoyée à la centrale (37).

9. Procédé selon l'une des revendications 1 à 8, **caractérisé par** l'étape préalable de l'envoi d'un état (st) de l'unité embarquée (5) vers la balise (32) et par l'établissement du message d'infraction routière (rec) dans la balise (32) en fonction de l'état reçu (st).

10. Procédé selon l'une des revendications 1 à 9, **caractérisé en ce que** la communication (8) a lieu selon la norme DSRC entre la balise (32) et l'unité embarquée (5).

11. Unité embarquée pour un véhicule, avec un émetteur-récepteur (13), un dispositif d'entrée (16) et un dispositif de sortie (17), où l'unité embarquée (5) est conçue pour
réceptionner un message d'infraction routière (rec) à partir d'une balise (32) et le délivrer au dispositif de sortie (17),
accepter un choix d'utilisateur (y/n) concernant deux options par l'intermédiaire du dispositif d'entrée (17),
**caractérisé en ce que** l'unité embarquée (5) est en outre conçue pour
lorsque le choix d'utilisateur (y/n) indique la première option (n), envoyer le message d'infraction routière (rec) à une centrale (37) éloignée, où une signature cryptographique de l'unité embarquée (5) est transmise conjointement avec le message d'infraction routière (rec), ou
lorsque le choix d'utilisateur (y/n) indique la seconde option (y), engager la création d'une transaction de prélèvement (ta) pour un compte d'utilisateur (41) concernant l'infraction routière (rec).

12. Unité embarquée selon la revendication 11, **caractérisée en ce qu'**elle est conçue pour signer et/ou encoder le message d'infraction routière (rec) avec une signature cryptographique.

13. Unité embarquée selon la revendication 11 ou 12, **caractérisée en ce qu'**elle contient un état (st) mémorisé pouvant être modifié et est conçue pour envoyer l'état (st) suite à une demande radio (33) vers la balise (32) par l'intermédiaire de l'émetteur-récepteur (13).

14. Unité embarquée selon l'une des revendications 11 à 13, **caractérisée en ce que** l'unité embarquée (5) est conçue pour gérer un compte d'utilisateur (41) et à l'imputer avec la transaction de prélèvement (ta).

15. Unité embarquée selon l'une des revendications 11 à 14, **caractérisée en ce que** l'émetteur-récepteur (13) est un émetteur-récepteur DSRC.
